# EUROPEAN PATENT APPLICATION

(11) **EP 4 064 710 A1**
(43) Date of publication of application: **28.09.2022**
(21) Application number: 22159200.9
(22) Date of filing: 28.02.2022
(51) Int. Cl.: H04N 21/2187, G06Q 30/06, H04N 21/478, H04N 21/254

(54) **METHOD AND APPARATUS FOR LIVE STREAMING**

(30) Priority: 22.03.2021 CN 202110303173
(71) Applicant: Beijing Dajia Internet Information Technology Co., Ltd., Beijing 100085 (CN)
(72) Inventor: TANG, Xiao, Haidian District Beijing, 100085 (CN)
(74) Representative: Vossius & Partner Patentanwälte Rechtsanwälte mbB

(57) **Abstract**

The present disclosure relates to a method, apparatus, server, electronic device, and computer readable storage medium for live streaming. This method includes that: a live streaming server receives an appointment request initiated by an audience account on a target object in a list of objects corresponding to a live streaming room, detects whether a recommendation is performed by a host account on the target object; sends a notification message to the audience account in response to detecting that the recommendation is performed by the host account on the target object; and sends the live streaming room to the audience account in response to receiving trigger feedback sent by the audience account on the notification message, causing the live streaming room to be displayed on a client of the audience account.

## Description

### TECHNICAL FIELD

The present disclosure relates to the field of live streaming technology.

### BACKGROUND

In related art, when a host recommends objects in a live streaming room, the audience can view a list of candidate objects in the live streaming room through terminals used by the audience.

However, at present, the list of candidate objects in the live streaming room is displayed as a static picture, which can only show the pre-set recommendation order and the estimated recommendation time for recommending the candidate objects. Therefore, the audience can easily miss the live streaming about the objects, and the flexibility of recommendation for the objects in the live streaming room is low.

### SUMMARY

The present disclosure provides methods, apparatuses, servers, electronic devices, and non-transitory computer-readable storage media for live streaming to address at least the problem of low flexibility of recommendation for objects in the live streaming room in the related art. The technical solutions of the present disclosure are as follows.

According to some arrangements of the present disclosure, a method for live streaming as applied to a live streaming server includes receiving an appointment request initiated by an audience account for a target object in a list of objects corresponding to a live streaming room, detecting whether a recommendation is performed by a host account for the target object, sending a notification message to the audience account in response to detecting that the recommendation is performed by the host account for the target object, and sending the live streaming room to the audience account, in response to receiving trigger feedback sent by the audience account on the notification message, causing the live streaming room to be displayed on a client of the audience account.

In an example arrangement, the method for live streaming further includes obtaining a live streaming timer corresponding to the target object in response to detecting that the recommendation is performed by the host account for the target object; and sending the live streaming timer to the client of the audience account, causing the live streaming timer to be displayed on the client of the audience account.

In an example arrangement, the method for live streaming further includes setting a link entry control corresponding to the target object, where setting the link entry control to an active state in response to detecting that the live streaming timer expires.

In an example arrangement, the method for live streaming further includes determining a quantity of order requests initiated by one or more audience accounts in the live streaming room for the target object, in response to detecting that a stock quantity of the target object is zero; and sending the quantity of the order requests to a client of the host account, causing the quantity of the order requests to be displayed on the client of the host account.

In an example arrangement, the method for live streaming further includes sending a notification of an adjustment for a recommendation sequence to the audience account in response to detecting that the recommendation sequence is adjusted by the host account, causing the notification of the adjustment for the recommendation sequence to be displayed on the client of the audience account.

According to some arrangements of the present disclosure, a method for live streaming as applied to a client of an audience account includes initiating an appointment request to a live streaming server in response to an appointment operation performed by the audience account on a target object in a list of objects corresponding to a live streaming room, where the appointment request is used for triggering the live streaming server to send, in response to detecting a recommendation is performed by a host account for the target object a notification message to the audience account, displaying, in response to receiving the notification message from the live streaming server corresponding to the target object, the notification message, and displaying the live streaming room in response to a trigger operation on the notification message.

In an example arrangement, initiating the appointment request to the live streaming server includes: displaying the list of objects comprising a plurality of candidate objects; displaying, in response to a selection operation performed by the audience account on a candidate object in the list of objects, an appointment control corresponding to the selected candidate object; and determining, in response to a trigger operation performed by the audience account on the appointment control, the selected candidate object as the target object, and initiating the appointment request to the live streaming server.

In an example arrangement, the method further includes displaying, in response to a stock quantity of the target object being zero, an order control in the list of objects, corresponding to the target object; and sending, in response to a trigger operation performed by the audience account on the order control, an order request to the live streaming server, causing the live streaming server to determine a quantity of order requests and to send the quantity of order requests to a client of the host account to be displayed on the client of the host account.

In an example arrangement, the method further includes receiving, in response to an adjustment for a recommendation sequence of the target object, a notification of the adjustment for the recommendation sequence corresponding to the target object from the live streaming server; and displaying the notification of the adjustment for the recommendation sequence.

According to some arrangements of the present disclosure, a method for live streaming as applied to a client of a host account includes displaying a list of objects including a target object, where the target object is appointed by an audience account; sending, in response to detecting operational information of a recommendation performed by a host account on the target object, a pre-recommendation message corresponding to the target object to a live streaming server, where the pre-recommendation message is used for triggering the live streaming server to send a notification message to the audience account triggering an appointment operation on the target object, and send, in response to receiving trigger feedback sent by the audience account on the notification message, the live streaming room to the audience account, causing the live streaming room to be displayed on a client of the audience account.

In an example arrangement, sending, in response to detecting operational information of the recommendation performed by the host account on the target object, the pre-recommendation message corresponding to the target object to the live streaming server includes: displaying, in response to a selection operation performed by the host account on the target object in the list of objects, a pre-recommendation control corresponding to the target object, and sending the pre-recommendation message corresponding to the target object to the live streaming server in response to receiving a trigger operation performed by the host account on the pre-recommendation control.

In an example arrangement, in response to sending the pre-recommendation message corresponding to the target object to the live streaming server, the method for live streaming further includes: receiving, in response to a stock quantity of the target object being zero, the number of order requests for the target object from the live streaming server, where the number of order requests is obtained by the live streaming server determining the order requests triggered by one or more audience accounts in the live streaming room for the target object, and displaying the number of the order requests.

In an example arrangement, in response to displaying the list of objects including the target object, the method for live streaming further includes: sending, in response to detecting operational information of an adjustment by the host account for a recommendation sequence of the target object, recommendation sequence adjustment information corresponding to the target object to the live streaming server detects operational information of an adjustment by the host account for a recommendation sequence of the target object. The recommendation sequence adjustment information is used for triggering the live streaming server to send a notification of the adjustment for the recommendation sequence to the audience account, causing the notification of adjustment for the recommendation sequence to be displayed on the client of the audience account.

According to some arrangements of the present disclosure, an apparatus for live streaming as applied to a live streaming server includes an appointment operation receiving unit, configured to receive an appointment request initiated by an audience account for a target object in a list of objects corresponding to a live streaming room, and configured to detect whether a recommendation is performed by a host account for the target object, a notification message sending unit, configured to send a notification message to the audience account in response to detecting that the recommendation is performed by the host account for the target object, and a live streaming room sending unit, configured to send the live streaming room to the audience account in response to receiving trigger feedback sent by the audience account on the notification message, causing the live streaming room to be displayed on a client of the audience account.

In an example arrangement, the apparatus for live streaming further includes a live streaming timer obtaining unit, which is configured to obtain a live streaming timer corresponding to the target object in response to detecting that the recommendation is performed by the host account for the target object; and send the live streaming timer to the client of the audience account, causing the live streaming timer to be displayed on the client of the audience account.

In an example arrangement, the apparatus for live streaming further includes a link entry activation unit, which is configured to set a link entry control corresponding to the target object; where setting the link entry control to an active state in response to detecting that the live streaming timer expires.

In an example arrangement, the apparatus for live streaming further includes an order quantity counting unit, which is configured to determine a quantity of order requests initiated by one or more audience accounts in the live streaming room for the target object, in response to detecting that a stock quantity of the target object is zero; and send the quantity of the order requests to a client of the host account, causing the quantity of the order requests to be displayed on the client of the host account.

In an example arrangement, the apparatus for live streaming further includes an adjustment notification sending unit, which is configured to send a notification of an adjustment for a recommendation sequence to the audience account in response to detecting that the recommendation sequence is adjusted by the host account, causing the notification of the adjustment for the recommendation sequence to be displayed on the client of the audience account.

According to some arrangements of the present disclosure, an apparatus for live streaming as applied to a client of an audience account includes an appointment request initiation unit configured to initiate an appointment request to a live streaming server in response to an appointment operation performed by an audience account on a target object in a list of objects corresponding to a live streaming room, where the appointment request is used for triggering the live streaming server to send, in response to detecting a recommendation is performed by a host account for the target object, a notification message to the audience account, a notification message display unit configured to display, in response to receiving the notification message from the live streaming server corresponding to the target object, the notification message, and a live streaming room display unit, configured to display the live streaming room in response to a trigger operation on the notification message.

In an example arrangement, the appointment request initiation unit is further configured to display the list of objects including a plurality of candidate objects, display, in response to a selection operation performed by the audience account on a candidate object in the list of objects, an appointment control corresponding to the selected candidate object, and determine, in response to a trigger operation performed by the audience account on the appointment control, the selected candidate object as the target object, and initiate the appointment request to the live streaming server.

In an example arrangement, the apparatus for live streaming further includes an order request sending unit configured to display, in response to a stock quantity of the target object being zero, an order control in the list of objects, corresponding to the target object, and send, in response to a trigger operation performed by the audience account on the order control, an order request to the live streaming server, causing the live streaming server to determine a quantity of order requests and to send the quantity of order requests to a client of the host account to display the quantity of order requests on the client of the host account.

In an example arrangement, the apparatus for live streaming further includes an adjustment notification display unit configured to receive, in response to an adjustment for a recommendation sequence of the target object, a notification of the adjustment for the recommendation sequence corresponding to the target object from the live streaming server, and display the notification of the adjustment for the recommendation sequence.

According to some arrangements of the present disclosure, an apparatus for live streaming as applied to a client of a host account includes an object list display unit configured to display a list of objects including a target object, where the target object is appointed by an audience account, a pre-recommendation sending unit configured to send, in response to detecting operational information of a recommendation performed by a host account for the target object, a pre-recommendation message corresponding to the target object to a live streaming server, where the pre-recommendation message is used for triggering the live streaming server to send a notification message to the audience account triggering an appointment operation on the target object, and send, in response to receiving trigger feedback sent by the audience account on the notification message, the live streaming room to the audience account, causing the live streaming room to be displayed on a client of the audience account.

In an example arrangement, the pre-recommendation sending unit is further configured to display, in response to a selection operation performed by the host account on the target object in the list of objects, a pre-recommendation control corresponding to the target object, and send the pre-recommendation message corresponding to the target object to the live streaming server in response to receiving a trigger operation performed by the host account on the pre-recommendation control.

In an example arrangement, the apparatus for live streaming further includes an order quantity display unit configured to receive, in response to a stock quantity of the target object being zero, a quantity of order requests for the target object from the live streaming server, where the quantity of order requests is obtained by the live streaming server determining the order requests triggered by one or more audience accounts in the live streaming room for the target object, and display the quantity of the order requests.

In an example arrangement, the apparatus for live streaming further includes a recommendation sequence adjustment unit configured to send recommendation sequence adjustment information corresponding to the target object to the live streaming server in response to detecting operational information of an adjustment by the host account for a recommendation sequence of the target object. The recommendation sequence adjustment information is used for triggering the live streaming server to send a notification of the adjustment for the recommendation sequence to the audience account, causing the notification of adjustment for the recommendation sequence to be displayed on the client of the audience account.

According to some arrangements of the present disclosure, a server includes a processor, and a memory configured to store executable instructions for the processor. The processor is configured to execute the instructions to implement the method for live streaming applied to the live streaming server as described in any one of the arrangements above.

According to some arrangements of the present disclosure, an electronic device includes a processor, and a memory configured to store executable instructions for the processor. The processor is configured to execute the instructions to implement the method for live streaming applied to the client of the audience account as described in any one of the arrangements above, or to implement the method for live streaming applied to the client of the host account as described in any one of the arrangements above.

According to some arrangements of the present disclosure, a non-transitory computer-readable storage medium, when instructions in the non-transitory computer-readable storage medium are executed by the processor of the server, enables the server to implement the method for live streaming applied to the live streaming server as described in any one of the arrangements above.

According to some arrangements of the present disclosure, a non-transitory computer-readable storage medium, when instructions in the non-transitory computer-readable storage medium are executed by the processor of the electronic device, enables the electronic device to implement the method for live streaming applied to the client of the audience account as described in any one of the arrangements above, or to implement the method for live streaming applied to the client of the host account as described in any one of the arrangements above.

According to some arrangements of the present disclosure, a computer program product including a computer program is configured to, when executed by a processor, implement at least one method for live streaming described herein.

In the present disclosure, the live streaming server receives the appointment request initiated by the audience account on the target object in the list of objects corresponding to the live streaming room, and detects whether the recommendation is performed by the host account for the target object. In response to detecting that the recommendation is performed by the host account for the target object, the live streaming server sends the notification message to the audience account, receives the trigger feedback sent by the audience account on the notification message, and sends the live streaming room to the audience account, causing the live streaming room to be displayed on the client of the audience account. The live streaming room shows that the host account is ready to recommend the target object. In response to receiving the appointment request initiated by the audience account on the list of objects, the live streaming server, provided by the present disclosure, can return notification message to the audience account when the host account is ready to recommend the target object. The live streaming room showing that the host account is ready to recommend the target object, can be directly displayed to the audience account by triggering the notification message. Thus, the object appointment function of the live streaming room is realized, which can prevent the audience from missing the time of object introduction and the time to obtain the object in the live streaming room and improve the flexibility of recommendation for objects in the live streaming room.

It should be understood that the above general description and the detailed description below are examples and explanatory only and do not limit the present disclosure.

### BRIEF DESCRIPTION OF THE DRAWINGS

The accompanying drawings herein are incorporated into and form part of the description, illustrate arrangements consistent with the present disclosure, and are used with the description to explain the principles of the present disclosure, and do not constitute an undue limitation of the present disclosure.
FIG. 1 illustrates a diagram of an application environment for a method for live streaming according to an example arrangement.
FIG. 2 illustrates a flowchart of a method for live streaming according to an example arrangement.
FIG. 3 illustrates a flowchart of sending a recommendation countdown timer to a client of an audience account according to an example arrangement.
FIG. 4 illustrates a flowchart of sending the number of order requests to a client of a host account according to an example arrangement.
FIG. 5 illustrates a flowchart of a method for live streaming according to another example arrangement.
FIG. 6 illustrates a diagram of an interface displaying a list of objects in a live streaming room according to an example arrangement.
FIG. 7 illustrates a flowchart of initiating an appointment request to a live streaming server according to an example arrangement.
FIG. 8 illustrates a flowchart of a method for live streaming according to yet another example arrangement.
FIG. 9 illustrates an interaction diagram of a method for live streaming according to an example arrangement.
FIG. 10 illustrates a block diagram of an apparatus for live streaming according to an example arrangement.
FIG. 11 illustrates a block diagram of an apparatus for live streaming according to another example arrangement.
FIG. 12 illustrates a block diagram of an apparatus for live streaming according to yet another example arrangement.
FIG. 13 illustrates a block diagram of a server according to an example arrangement.
FIG. 14 illustrates a block diagram of an electronic device according to an example arrangement.

### DETAILED DESCRIPTION

In order to provide the one of ordinary skill in the art with a better understanding of the technical solutions of the present disclosure, the technical solutions in arrangements of the present disclosure will be clearly and completely described below in conjunction with the accompanying drawings.

It should be noted that the terms "first", "second", etc. in the description, claims and the above-mentioned drawings of the present disclosure are used to distinguish similar objects, and are not necessarily used to describe a specific order or sequence. It should be understood that such use of the terms is interchangeable where appropriate so that arrangements of the present disclosure described herein can be implemented in an order other than those illustrated or described herein. The arrangements described in the following example arrangements do not represent all arrangements that are consistent with the present disclosure. Rather, they are only examples of devices and methods that are consistent with some aspects of the present disclosure, as detailed in the appended claims.

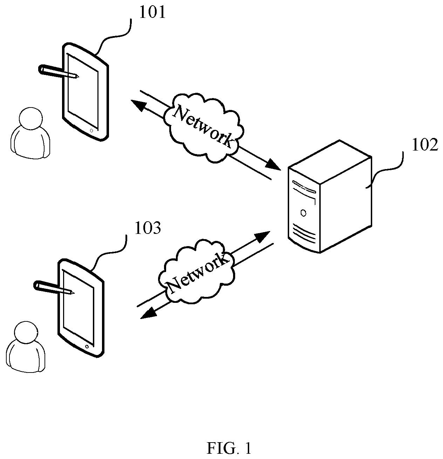

The method for live streaming, provided by the present disclosure, can be applied in an application environment as shown in FIG. 1. The client 101 logged in by the audience account and the client 103 logged in by the host account interact with the live streaming server 102 via a network. In some arrangements, the audience account may perform an appointment operation on a target object in a list of objects displayed in the live streaming room via the client 101 of the audience account, and the live streaming server 102 may respond to the appointment operation and detect whether a recommendation is performed by the host account for the target object via the client 103 of the host account. In response to detecting that the recommendation is performed by the host account for the target object, a notification message is sent to the audience account. The audience account can then perform a trigger operation on the notification message, and the live streaming server 102, upon receiving the trigger operation, can then send the audience account the live streaming room which displays that the host account is ready to recommend the target object, so the live streaming room is displayed on the client 101 of the audience account. Here, the client 101 of the audience account and the client 103 of the host account may be, but are not limited to, various personal computers, laptops, smartphones, tablets, and portable wearable devices, and the live streaming server 102 may be implemented with a standalone server or a server cluster of multiple servers.

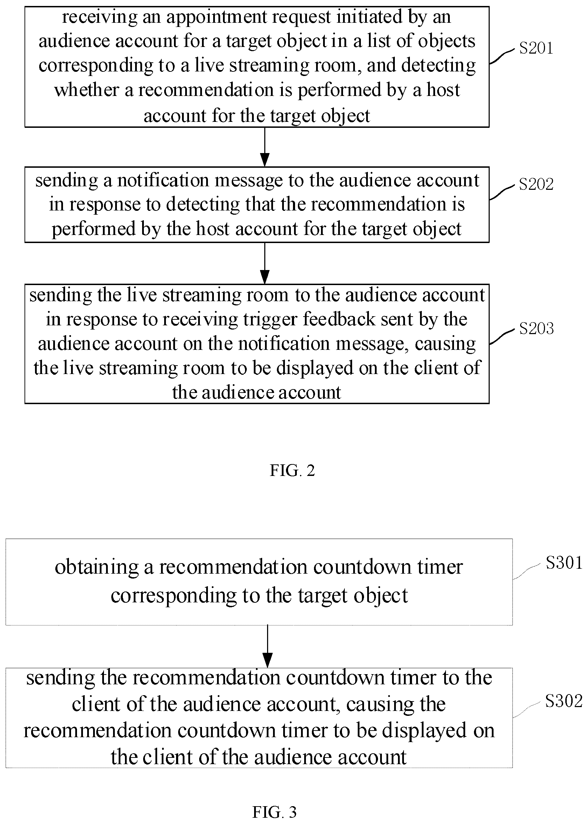

FIG. 2 illustrates a flowchart of a method for live streaming according to an example arrangement. As show in FIG. 2, the method for live streaming is applied to the live streaming server 102.

At S201, the live streaming server 102 receives an appointment request initiated by an audience account for a target object in a list of objects corresponding to a live streaming room, and detects whether a recommendation is performed by a host account for the target obj ect.

Here, the host account refers to the account of the host that is logged in for live streaming in the live streaming room, and the client that the host account is logged into is the client 103 of the host account. The audience account refers to the account logged in by the audience who is in the same live streaming room as the host, and the client that the audience account is logged into is the client 101 of the audience account. The list of objects includes of the candidate objects to be recommended by the host account in the live streaming room, and can be displayed in the live streaming room.

In some arrangements, the audience account may perform an appointment operation on one or more of the candidate objects in the list of objects displayed in the client 101 of the audience account, and takes the one or more appointed candidate objects as the target object(s). The live streaming server 102 may receive the information about the above-mentioned appointment operation and detect whether a recommendation is performed by the host account for the target object. For example, the candidate objects in the list of objects may be some merchandise that the host account intends to recommend in the live streaming room, and the host account may recommend the merchandise by introducing the same in the live streaming room. The list of objects may be a list including of the merchandise to be recommended by the host account in the live streaming room. The audience account may perform the appointment operation on the list of merchandise displayed in the live streaming room, and the appointed merchandise can be the target object.

At S202, the live streaming server 102 sends a notification message to the audience account in response to detecting that the recommendation is performed by the host account for the target object.

In response to the live streaming server 102 detecting that the recommendation is performed by the host account for the target object which has been appointed by the audience account, then a corresponding notification message may be sent to the client 101 of the audience account. This notification message may be preset and correspond to the target object for reminding the audience account that the host account is currently ready to recommend the appointed target object so that in case the audience leaves the live streaming room, it is possible to know the approximate time when the host account recommends his or her desired obj ect.

At S203, the live streaming server 102 sends the live streaming room to the audience account in response to receiving trigger feedback sent by the audience account on the notification message, causing the live streaming room to be displayed on the client 101 of the audience account.

After the live streaming server 102 sends the notification message to the audience account, the audience account can then trigger the notification message, for example, by clicking on the notification message. The live streaming server 102 can then receive the trigger feedback and respond to the trigger feedback by returning the live streaming room showing the host account ready to recommend the target object as the current live streaming screen to the audience account, and the aforementioned current live streaming screen is displayed on the client 101 of the audience account, thus realizing the effect of the audience account entering the live streaming room with one click through the notification message.

In the above method for live streaming, the live streaming server 102 receives the appointment request initiated by the audience account on the target object in the list of objects corresponding to the live streaming room, and detects whether the recommendation is performed by the host account for the target object. In response to detecting that the recommendation is performed by the host account for the target object, the live streaming server 102 sends the notification message to the audience account, receives the trigger feedback sent by the audience account on the notification message, and sends the live streaming room to the audience account, causing the live streaming room to be displayed on the client 101 of the audience account. The live streaming room shows that the host account is ready to recommend the target object. In response to receiving the appointment request initiated by the audience account on the list of objects, the live streaming server 102, provided by the present disclosure, can return notification message to the audience account when the host account is ready to recommend the target object. The live streaming room showing that the host account is ready to recommend the target object, can be directly displayed to the audience account by triggering the notification message. Thus, the object appointment function of the live streaming room is realized, which can prevent the audience from missing the time of object introduction and the time to obtain the object in the live streaming room and improve the flexibility of recommendation for objects in the live streaming room.

In an example arrangement, as shown in FIG. 3, after S202, the method for live streaming can further includes the following.

At S301, the live streaming server 102 obtains a recommendation countdown timer corresponding to the target object.

Here, the recommendation countdown timer refers to the countdown from the time the host account is ready to recommend the target object to the time the host account actually recommends the target object. After the host account performs the recommendation for the target object, in order to allow more audience accounts to respond to the notification message sent by the live streaming server 102 and trigger the corresponding trigger operation, the live streaming server 102 may also, in this arrangement, allow sufficient response time for the audience account to respond to the notification message by setting the recommendation countdown timer, and the recommendation may made by the host account for the target object after displaying the live streaming room to the audience account. The recommendation countdown timer may be pre-set or adjusted by the live streaming server 102 according to different target objects. In the example in which the number of audience accounts that performed the appointments with a certain target object is large, a longer recommendation countdown may be set for that target object to reduce the impact on network latency caused by the excessive number of audience accounts.

At S302, the live streaming server 102 sends the recommendation countdown timer to the client 101 of the audience account, causing the recommendation countdown timer to be displayed on the client of the audience account.

The live streaming server 102 may also send the recommendation countdown timer to the client 101 of the audience account, causing the recommendation countdown timer to be displayed in the client of the audience account so that the audience account can be informed of the countdown for the recommendation by the host account for the target object.

After S301, the method for live streaming may further include the live streaming server 102 setting a link entry control corresponding to the target object in the list of objects. The live server 102 sets the link entry control to an active state in response to detecting that the recommendation countdown timer expires.

Here, the link entry control is displayed in the live streaming room, and may be a button for accessing a link through which the audience account may access an object link corresponding to the target object, which may be, for example, a purchase link of the appointed merchandise. In some arrangements, the live streaming server 102 may monitor the time remaining in the recommendation countdown in real time, and in response to determining that the recommendation countdown timer has not expired, e.g., until the host account starts recommending the target object, the link entry control displayed in the live streaming room may be set to be inactive by the live streaming server 102, at which point the audience account cannot access the object link of the target object through the link entry control. Until the recommendation countdown timer expires, the live streaming server 102 sets the link entry control in the live streaming room to an active state, at which point the audience account can link the entry control through.

In some arrangements, the link entry control may also be pre-set to a hidden state in the live streaming room, invisible, and hidden in the screen of the live streaming room while the recommendation countdown timer has not expired, making it impossible for the audience accounts to view the location of the link entry control. Until the recommendation countdown timer expires, the link entry control is unhidden and displayed in the live streaming room.

In the above arrangement, the live streaming server 102 may set the recommendation countdown timer to allow sufficient response time for audience account(s) to respond to the notification message so that more audience accounts can respond to the notification message, and the recommendation countdown timer may be adjusted accordingly to the target object to be set more accurately. In addition, the recommendation countdown timer may be used to determine the activation status of the link entry control corresponding to the target object, with the link entry control being set to active only after the recommendation countdown timer expires to ensure that the audience accounts can have more equal access to the link corresponding to the target object.

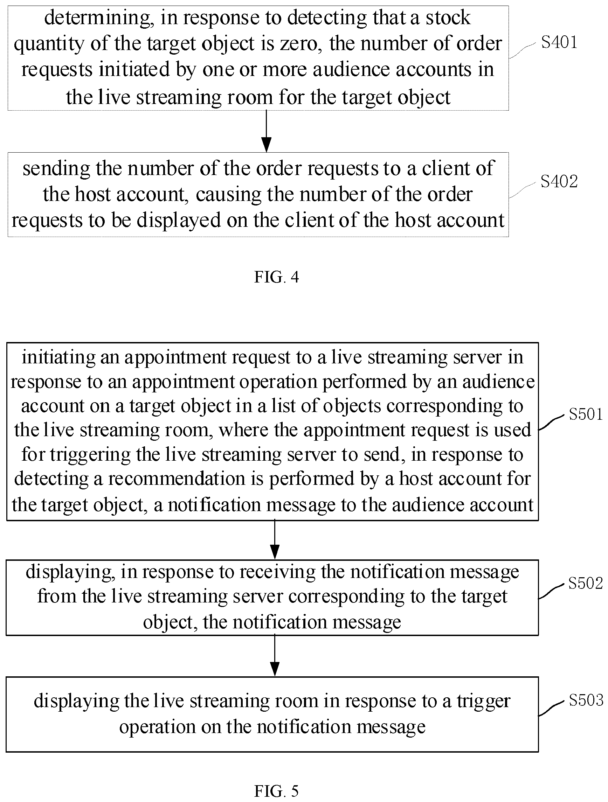

Furthermore, in an example arrangement, as shown in FIG. 4, after S203, the method may further include following.

At S401, the live streaming server determines, in response to detecting that a stock quantity of the target object is zero, the number of order requests initiated by one or more audience accounts in the live streaming room for the target object.

Here, the number of order requests refers to the number of order requests triggered by the one or more audience accounts. After the stock quantity of the target object becomes zero, e.g., the pre-determined number of target objects has been fully recommended, if there is still an audience account that wants the target object, e.g., when the pre-stocked items have been sold and there is still an audience account that want to purchase the item, the audience account can then initiate an order request to the live streaming server 102 via the client 101 of the audience account, causing the live streaming server 102 to determine the number of order requests obtained.

At S402, the live streaming server 102 sends the number of the order requests to a client 103 of the host account, causing the number of the order requests to be displayed on the client 103 of the host account.

After the live streaming server 102 has determined the number of order requests at S401, then it can send the number of order requests to the client 103 of the host account to enable displaying the number of order requests on the client 103 of the host account, then the host account can adjust the corresponding stock quantity for the next recommendation for the target object based on the displayed number of order requests.

In this arrangement, the live streaming server 102 may also determine the number of order requests initiated by the one or more audience accounts in the live streaming room for the target object in response to detecting that the stock quantity of the target object is zero and send it to the client 103 of the host account for display, so that the host account may adjust the stock of the target item based on the displayed number of order requests to make it possible to improve the rationality of target object allocation by enabling more audience accounts to get the target object.

In an example arrangement, after S201, the method for live streaming may further includes that the live streaming server 102 sends a notification of an adjustment for the recommendation sequence to the audience account in response to detecting that the recommendation sequence is adjusted by the host account, causing the notification of the adjustment for the recommendation sequence to be displayed on the client 101 of the audience account.

Here, the recommendation sequence of the target object refers to the sequence in which the host account is prepared to recommend the target object. Generally, the host account recommends objects in accordance with the predetermined sequence. Then the list of objects is formed in this sequence, so the audience account can roughly learn the recommendation sequence for the target object when performing the appointment operation on the target object. If there is a need to adjust the recommendation sequence by the host account for the target object, the live streaming server 102 can then notify the audience account that the recommendation sequence of the target object has been adjusted, e.g., issue a notification of the adjustment for the recommendation sequence. Specifically, after receiving the appointment request initiated by the audience account on the target object, the live streaming server 102 may detect in real time whether the host account has made relevant adjustments to the recommendation sequence of the target object, and in response to detecting that the host account has adjusted the recommendation sequence for the target object, it may send a corresponding notification of the adjustment for the recommendation sequence to the client 101 of the audience account for display. This notification may carry such things as the adjusted recommendation sequence of the target object, and the adjusted recommendation time of the target object, etc.

In this arrangement, after the recommendation sequence of the target object is adjusted, the live streaming server 102 can return the notification of the adjustment for the recommendation sequence to the audience account to inform the audience account, which allows the audience account to know the recommendation sequence of the target object in real time, thus preventing the audience accounts from missing the time of object introduction and the time to obtain the object in the live streaming room.

FIG. 5 illustrates a flowchart of a method for live streaming according to another example arrangement. As show in FIG. 5, the method for live streaming is applied to the client 101 of the audience account and includes the following.

At S501, the client 101 of the audience account initiates an appointment request to a live streaming server in response to an appointment operation performed by an audience account on a target object in a list of objects corresponding to the live streaming room. The appointment request is used for triggering the live streaming server 102 to send, in response to detecting a recommendation is performed by a host account for the target object, a notification message to the audience account.

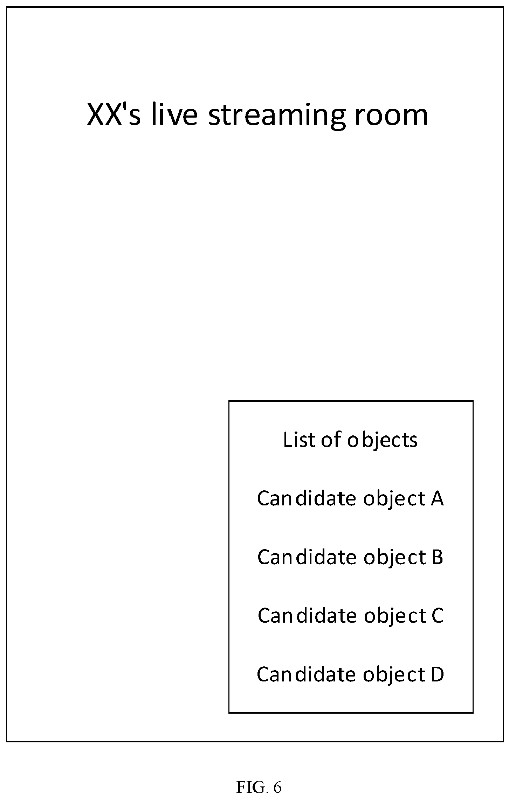

Here, the list of objects stores a plurality of candidate objects for which recommendations need to be performed by the host account, and the list can be displayed in the live streaming room. As shown in FIG. 6, when the audience account enters the live streaming room via the client 101 of the audience account, the list of objects can be viewed. Then, the audience account can perform the appointment operation on a target object by triggering the list of objects, and the client 101 of the audience account initiates the appointment request to the live streaming server 102. After receiving the appointment request, the live streaming server 102 can detect whether the host account is ready to recommend the target object, and in response to host account having performed the recommendation for the target object, the live streaming server 102 may send the notification message to the audience account that has made the appointment.

At S502, the client 101 of the audience account displays, in response to receiving the notification message from the live streaming server 102 corresponding to the target object, the notification message.

At S503, the client 101 of the audience account displays the live streaming room in response to a trigger operation on the notification message.

The notification message may be used to remind the audience account that the host account currently performs the recommendation operation on the appointed target object. After the client 101 of the audience account receives the notification message fed back by the live streaming server 102, the notification message may be displayed on the client 101 of the audience account, and the audience account may perform a corresponding trigger operation on the displayed notification message, for example, it can be triggered by clicking the notification message. Then, the client 101 of the audience account can respond to the trigger feedback sent by the audience account, and the live streaming room showing the host account is ready to recommend the target object can be displayed on the client 101 of the audience account, thus realizing the effect of entering the live streaming room with one click through the notification information.

In the above method for live streaming the client 101 of the audience account initiates the appointment request to the live streaming server 102 in response to the appointment operation performed by the audience account on the target object in the list of objects corresponding to the live streaming room, where the appointment request is used for triggering the live streaming server to detect whether the recommendation is performed by the host account for the target object, and if so, the notification message is sent to the audience account, displays the notification message in response to receiving the notification message corresponding to the target object from the live streaming server 102, and displays the live streaming room in response to the trigger operation on the notification message. The live streaming room displays that the host account is ready to recommend the target object. In the present disclosure, the audience account can perform the appointment operation on the list of objects through the client 101 of the audience account, and when the host account performs the recommendation for the target object, the live streaming server 102 can feed back the notification message to the audience account, and the audience account can, through the notification message, enter directly into the live streaming room of the host account preparing to recommend the target object, which realizes the object appointment function of the live streaming room and can avoid the audience missing the time of object introduction and the time to obtain the object in the live streaming room, thus improving the flexibility of recommendation for objects in the live streaming room.

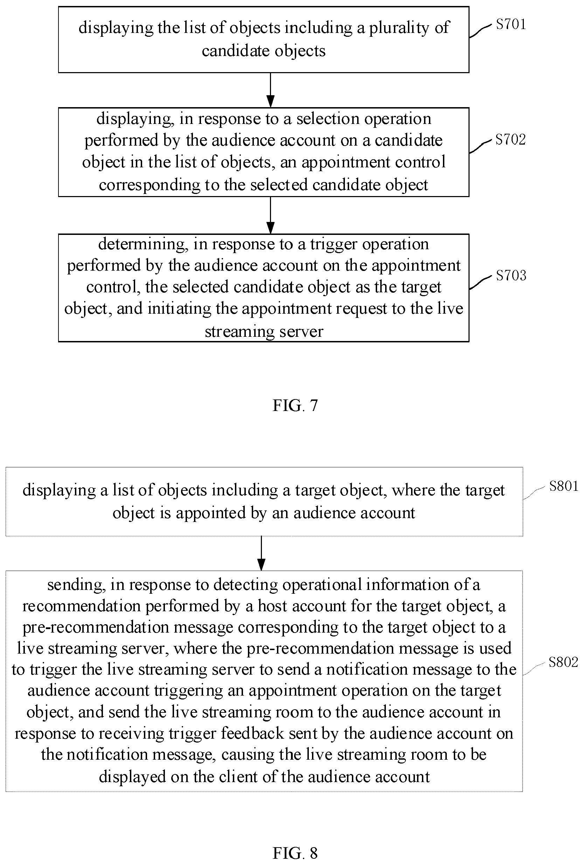

In an example arrangement, as shown in FIG. 7, S501 may further includes following.

At S701, the client 101 of the audience account displays the list of objects including a plurality of candidate objects.

At S702, the client 101 of the audience account displays, in response to a selection operation performed by the audience account on a candidate object in the list of objects, an appointment control corresponding to the selected candidate object.

Here, the candidate object is an object for which a recommendation is ready to be made by the host account in the live streaming room. There can be more than one candidate object, and a plurality of candidate objects can be shown in the list of objects and displayed on the client 101 of the audience account. The appointment control is a control that may be displayed on the list of objects in the live streaming room and may be a certain button for making an appointment for a target object. In some arrangements, the client 101 of the audience account may know in advance the list of objects containing a plurality of candidate objects to be recommended by the host account, and may display the appointment control corresponding to the selected candidate object when the audience account needs to make an appointment for one or more candidate objects in the list of objects and perform a selection operation on the one or more candidate objects in the list of objects. For example, when the user selects a candidate object by a selection operation, the client 101 of the audience account can display a detailed information page about the selected candidate object, and display the appointment control on the displayed information page.

At S703, the client 101 of the audience account determines, in response to a trigger operation performed by the audience account on the appointment control, the selected candidate object as the target object, and initiates the appointment request to the live streaming server 102.

After the client 101 of the audience account displays the appointment control, the audience account can make an appointment for the candidate object by performing a corresponding trigger operation for the appointment control, and the client 101 of the audience account can, in response to the trigger operation, initiates an appointment request to the live streaming server 102 for one or more appointed candidate objects, while taking the one or more candidate objects as the target objects.

Further, after S503, the method for live streaming may further include that the client 101 of the audience account displays, in response to a stock quantity of the target object being zero, an order control on the list of objects, corresponding to the target object, and sends, in response to a trigger operation performed by the audience account on the order control, an order request to the live streaming server 102, causing the live streaming server 102 to determine the number of order requests and to send the number of order requests to the client 103 of the host account to display the number of order requests on the client of the host account.

The order control is a control used to initiate the order request for the target object, which can also be displayed on the list of objects in the live streaming room. Specifically, if the stock quantity of the target object is zero, e.g., the predetermined quantity of the target object has been recommended, and after that there is still an audience account in the live streaming room that wants the target object, the order control corresponding to the target object displayed on the list of objects can be used to trigger the order request. The audience account can trigger the order request for the target object by clicking on the order control to the client 101 of the audience account, and the client 101 of the audience account can send the order request to the live streaming server 102 so that the live streaming server 102 can determine the number of the received order requests and send the number of order requests to the client 103 of the host account for display, after which the host account can then adjust the corresponding stock quantity for the next recommendation for the target object based on the displayed number of order requests.

In the above arrangement, the audience account can trigger the appointment request for the target object via the appointment control displayed on the client 101 of the audience account, which can improve the convenience of triggering the appointment request, and can also display the order control in response to the stock quantity of the target object being zero so that the audience account can trigger the order request via the order control to enable the live streaming server 102 to determine the number of received order requests and send them to the client 103 of the host account for display. Thus, the adjustment for the amount of the target item in stock by the host account based on the displayed number of order requests can be realized, thus enabling more audience accounts getting their target objects, improving the reasonableness of the target object allocation.

In an example arrangement, after S501, the method for live streaming may further includes that the client 101 of the audience account receives, in response to an adjustment for a recommendation sequence of the target object, a notification of the adjustment for the recommendation sequence corresponding to the target object from the live streaming server 102, and displaying the notification of the adjustment for the recommendation sequence.

The notification of the adjustment for the recommendation sequence may be used to remind the audience account that the recommendation sequence of the target object has been adjusted, and may include the adjusted recommendation sequence of the target object and the adjusted recommendation time of the target object, and the like. After the client 101 of the audience account receives the notification of the adjustment for the recommendation sequence fed back by the live streaming server 102, the notification of the adjustment for the recommendation sequence may be displayed on the client 101 of the audience account, thus providing the audience account with the adjusted recommendation sequence and time of the target object in real time.

In the above arrangement, when the recommendation sequence of the target object is adjusted, the audience account can be informed of the recommendation sequence of the target object in real time via the client 101 of the audience account, which can further prevent the audience from missing the time of the object introduction and the time to obtain the object in the live streaming room.

FIG. 8 illustrates a flowchart of a method for live streaming according to an example arrangement. As shown in FIG. 8, the method for live streaming is applied in the client 103 of the host account and includes the following.

At S801, the client 103 of the host account displays a list of objects including a target object, where the target object is appointed by an audience account.

Here, the list of objects carries a plurality of objects for which the host account is ready to recommend for in the live streaming room, and the target object is in one or more candidate objects of the list of objects that has been appointed by the audience account in the live streaming room. In some arrangements, the client 103 of the host account can display the list of objects containing the target object in the live streaming room.

At S802, the client 103 of the host account sends, in response to detecting operational information of a recommendation performed by a host account for the target object, a pre-recommendation message corresponding to the target object to a live streaming server 102. The pre-recommendation message is used to trigger the live streaming server 102 to send a notification message to the audience account triggering an appointment operation on the target object, and send the live streaming room to the audience account in response to receiving trigger feedback sent by the audience account on the notification message, causing the live streaming room to be displayed on the client 101 of the audience account.

In response to the host account preparing to recommend the target object, the operational information of the recommendation performed for the target object can be triggered to the client 103 of the host account, and then the client 103 of the host account can, upon detecting the above-mentioned operational information, send a pre-recommendation message for the target object to the live streaming server 102. When the live streaming server 102 detects the pre-recommendation message, it can send a corresponding notification message to the audience account that has performed the appointment operation, receive the trigger feedback sent by the audience account on the notification message, and feed the audience account the live streaming room of the host account preparing to recommend the target object for displaying it on the client 101 of the audience account.

In the above method for live streaming, the client 103 of the host account displays the list of objects containing the target object, where the target object is appointed by the audience account, detects operational information of the recommendation operation performed by the host account on the target object, and sends a pre-recommendation message corresponding to the target object to the live streaming server 102, where the pre-recommendation message is used for triggering the live streaming server 102 to send the notification message to the audience account triggering the appointment operation on the target object, and send the live streaming room to the audience account for displaying it on the client 101 of the audience account in response to receiving the trigger feedback sent by the audience account on the notification message. The live streaming room displays that the host account is ready to recommend the target object. The live streaming server 102 provided by the present disclosure can, in response to receiving the appointment request initiated by the audience account on the list of objects, feed the notification message to the audience account when the host account is ready to recommend the target object through the client 103 of the host account, and the live streaming room which displays the host account preparing to recommend the target object can be directly displayed to the audience account by triggering the notification message. Thus, the object appointment function of the live streaming room is realized, which can prevent the audience from missing the time of object introduction and the time to obtain the object in the live streaming room and improve the flexibility of recommendation for objects in the live streaming room.

S802 may further include that the client 103 of the host account displays, in response to a selection operation performed by the host account on the target object in the list of objects, a pre-recommendation control corresponding to the target object, and sends the pre-recommendation message corresponding to the target object to the live streaming server 102 in response to receiving a trigger operation performed by the host account on the pre-recommendation control.

Here, the pre-recommendation control is a control that can be displayed on the list of objects in the live streaming room, and can be a button for triggering the recommendation to be performed for the target object. Specifically, the list of a plurality of candidate objects including the target object is displayed on the client 103 of the host account in advance, and if the host account is ready to perform a recommendation for the target object in the list, the operation of selecting the target object from the list can be performed, after which the client 103 of the host account can display pre-recommendation control corresponding to the target obj ect.

After the client 103 of the host account displays the pre-recommendation control, the host account may perform the trigger operation on the displayed pre-recommendation control, and the client 103 of the host account may send the pre-recommendation message corresponding to the target object to the live streaming server 102 in response to the trigger operation.

In the above arrangement, the host account can send the pre-recommendation message by triggering the pre-recommendation control displayed on the client 103 of the host account, thus reducing the difficulty of operation performed by the host account and improving the efficiency of sending the pre-recommendation message.

In addition, in an example arrangement, S802 may further include that the client 103 of the host account receives, in response to a stock quantity of the target object being zero, the number of order requests for the target object from the live streaming server 102, where the number of order requests is obtained by the live streaming server 102 determining the order requests triggered by one or more audience accounts in the live streaming room for the target object, and displays the number of the order requests.

The number of order requests is determined by the live streaming server 102 as the number of order requests initiated by the audience account for the target object in the live streaming room. In response to detecting that stock quantity of the target object is zero, e.g., the predetermined quantity of the target object has been recommended, if there is still an audience account in the live streaming room that wants the target object, the audience account can initiate the order request for the target object to the live streaming sever 102 through the client 101 of the audience account. The live streaming server 102 can then determine the received order requests and send the number of order requests to the client 103 of the host account for display, after which the host account can adjust the corresponding stock quantity for the next recommendation for the target object according to the displayed number of order requests.

In the above arrangement, the client 103 of the host account may display the number of order requests triggered by the audience account for the target object in response to detecting that the stock quantity of the target object is zero, thus, the adjustment for the target item in stock by the host account based on the displayed number of order requests can be realized, thus enabling more audience accounts getting their target objects, improving the reasonableness of the target object allocation.

In an example arrangement, after S801, the method for live streaming may further include that the client 103 of the host account detects operational information of an adjustment by the host account for a recommendation sequence of the target object, and sends recommendation sequence adjustment information corresponding to the target object to the live streaming server. The recommendation sequence adjustment information is used for triggering the live streaming server 102 to send a notification of the adjustment for the recommendation sequence to the audience account, causing the notification of adjustment for the recommendation sequence to be displayed on the client 101 of the audience account.

If the host account expects to adjust the recommendation sequence of the target objects, the operational information for adjusting the recommendation sequence of the target objects can be triggered via the client 103 of the host account. Generally, the arrangement order of multiple candidate objects in the list of objects can be adapted to the recommendation sequence in which the host account is prepared to recommend the candidate objects. If the host account needs to adjust the recommendation sequence of the target objects, it can adjust the arrangement order of the target objects in the list of objects displayed in the live streaming room through the client 103 of the host account, for example, by sliding the target objects in the list of objects to change the arrangement order of the target objects in the list. The client 103 of the host account may then send recommendation sequence adjustment information corresponding to the target object to the live streaming server 102 to cause the live streaming server 102 to send the notification of the adjustment for the recommendation sequence to the audience account and display it on the client 101 of the audience account to inform the audience account that the recommendation sequence of the target object has been adjusted.

In the above arrangement, the host account can adjust the recommendation sequence of the target objects at any time via the client 103 of the host account, and after the recommendation sequence of the target objects has been adjusted, the live streaming server 102 can send the notification of the adjustment for the recommendation sequence to the client 101 of the audience account to enable the audience account to know the recommendation sequence of the target objects in real time, which can further prevent the audience from missing the time of object introduction and the time to obtain the object in the live streaming room.

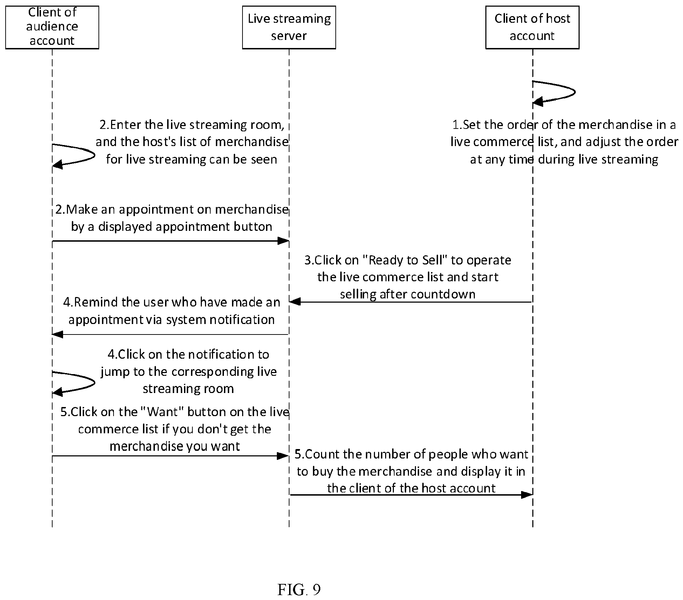

In an example arrangement, there is also provided a method for live streaming that can be applied to a merchandise function of the live streaming room, as shown in FIG. 9, which may include the following.
1. The host (e.g., the client of the host account) can set the order of the merchandise in his or her live commerce list in the live streaming room, and adjust the order at any time during the live streaming.
2. The audience (e.g., the client of the audience account) can enter the live streaming room and see the list of merchandise to be sold by the host during the live streaming. The audience can make an appointment for the one he/she wants to buy by communicating with the live streaming server. There is an appointment button on display for merchandise that the audience sees.
3. When the host is ready to start selling one of the merchandise, the commerce list can be operated by the host clicking on "Ready to Sell", e.g., after a countdown of 3 minutes (can be set flexibly) to start selling. The live streaming server receives the indicating that the host is ready.
4. After the host clicks on "Ready to Sell", user who has made an appointment will be reminded (by the live streaming server) via a system notification that the appointed merchandise is going to start selling. By clicking on the notification, the user can enter the corresponding live streaming room with one click.
5. When the audience does not get the merchandise that he/she wants, he/she can click on the "Want" button on the live commerce list. The live streaming server receives such indication. The live streaming server counts the number of audience account who would like to buy the merchandise and display the same to the client of the host account. The host can see how many people want to buy a certain merchandise, so that it is convenient to stock it in the next live streaming.

This arrangement provides a method for recommending an object in a live streaming room, and the audience can clearly know which item the host will sell at what time, but also provides an appointment function, and for the hotter item, the host can clearly know how many users still want, to facilitate the next stocking.

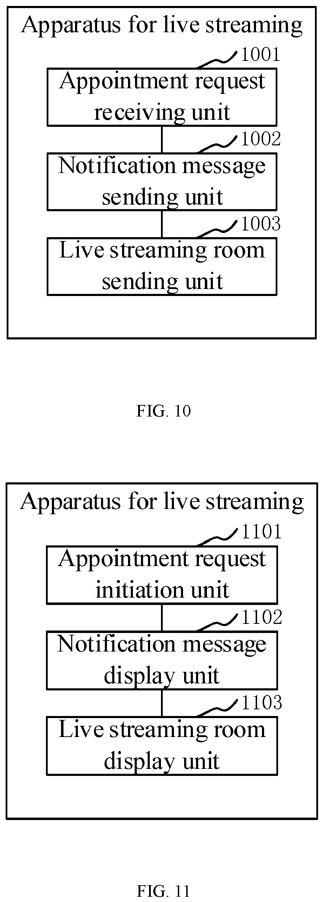

FIG. 10 illustrates a block diagram of an apparatus for live streaming according to an example arrangement. Referring to FIG. 10, the apparatus is applied to a live streaming server and includes an appointment request receiving unit 1001, a notification message sending unit 1002 and a live streaming room sending unit 1003.

The appointment operation receiving unit 1001 is configured to receive an appointment request initiated by an audience account for a target object in a list of objects corresponding to a live streaming room, and detect whether a recommendation is performed by a host account for the target object.

A notification message sending unit 1002 is configured to send a notification message to the audience account in response to detecting that the recommendation is performed by the host account for the target object.

The live streaming room sending unit 1003 is configured to receive trigger feedback sent by the audience account on the notification message, and configured to send the live streaming room to the audience account, causing the live streaming room to be displayed on a client of the audience account.

In an example arrangement, the apparatus for live streaming further includes a live streaming timer obtaining unit configured to obtain a live streaming timer corresponding to the target object in response to detecting that the recommendation is performed by the host account for the target object, and send the live streaming timer to the client of the audience account, causing the live streaming timer to be displayed on the client of the audience account.

In an example arrangement, the apparatus for live streaming further includes a link entry activation unit configured to set a link entry control corresponding to the target object where setting the link entry control to an active state in response to detecting that the live streaming timer expires.

In an example arrangement, the apparatus for live streaming further includes an order quantity counting unit configured to determine a quantity of order requests initiated by one or more audience accounts in the live streaming room for the target object, in response to detecting that a stock quantity of the target object is zero, and send the quantity of the order requests to a client of the host account, causing the quantity of the order requests to be displayed on the client of the host account.

In an example arrangement, the apparatus for live streaming further includes an adjustment notification sending unit configured to send a notification of an adjustment for a recommendation sequence to the audience account in response to detecting that the recommendation sequence is adjusted by the host account, causing the notification of the adjustment for the recommendation sequence to be displayed on the client of the audience account.

FIG. 11 illustrates a block diagram of an apparatus for live streaming according to an example arrangement. Referring to FIG. 11, the apparatus is applied to a client of an audience account and includes an appointment request initiation unit 1101, a notification message display unit 1102 and a live streaming room display unit 1103.

The appointment request initiation unit 1101 is configured to initiate an appointment request to a live streaming server in response to an appointment operation performed by the audience account on a target object in a list of objects corresponding to a live streaming room, wherein the appointment request is used for triggering the live streaming server to send, in response to detecting a recommendation is performed by a host account for the target object, a notification message to the audience account.

The notification message display unit 1102 is configured to display, in response to receiving the notification message from the live streaming server corresponding to the target object, the notification message.

The live streaming room display unit 1103 is configured to display the live streaming room in response to a trigger operation on the notification message.

In an example arrangement, the appointment request initiation unit 1101, is further configured to display the list of objects including a plurality of candidate objects, display, in response to a selection operation performed by the audience account on a candidate object in the list of objects, an appointment control corresponding to the selected candidate object, and determine, in response to a trigger operation performed by the audience account on the appointment control, the selected candidate object as the target object, and initiate the appointment request to the live streaming server.

In an example arrangement, the apparatus for live streaming further includes an order request sending unit configured to display, in response to a stock quantity of the target object being zero, an order control in the list of objects, corresponding to the target object, and send, in response to a trigger operation performed by the audience account on the order control, an order request to the live streaming server, causing the live streaming server to determine a quantity of order requests and to send the quantity of order requests to a client of the host account to display the quantity of order requests on the client of the host account.

In an example arrangement, the apparatus for live streaming further includes an adjustment notification display unit configured to receive, in response to an adjustment for a recommendation sequence of the target object, a notification of the adjustment for the recommendation sequence corresponding to the target object from the live streaming server, and display the notification of the adjustment for the recommendation sequence.

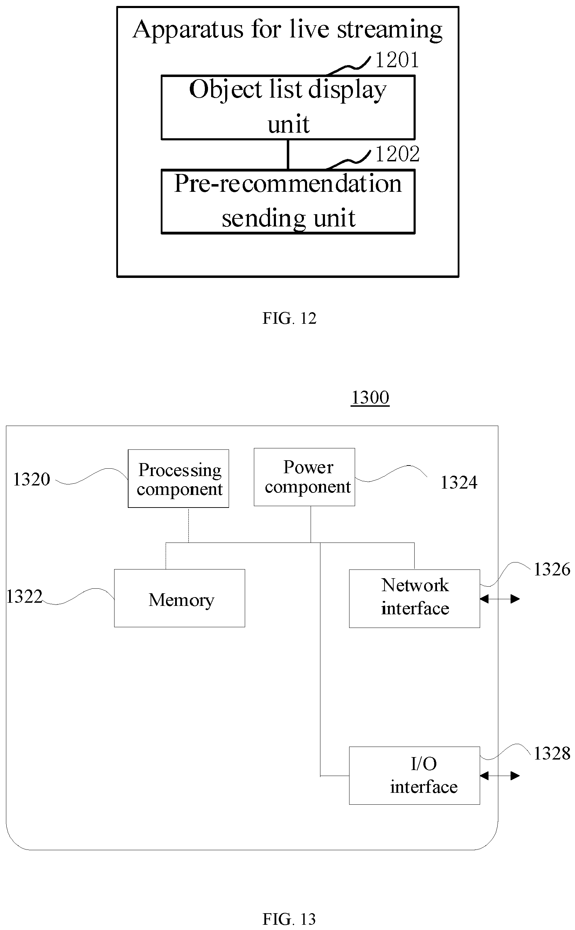

FIG. 12 illustrates a block diagram of an apparatus for live streaming according to an example arrangement. Referring to FIG. 12, the apparatus is applied to a client of a host account and includes an object list display unit 1201 and a pre-recommendation sending unit 1202.

The object list display unit 1201 is configured to display a list of objects including a target object, where the target object is appointed by an audience account.

The pre-recommendation sending unit 1202 is configured to send, in response to detecting operational information of a recommendation performed by a host account for the target object, a pre-recommendation message corresponding to the target object to a live streaming server. The pre-recommendation message is used for triggering the live streaming server to send a notification message to the audience account triggering an appointment operation on the target object, send, in response to receiving trigger feedback sent by the audience account on the notification message, the live streaming room to the audience account, causing the live streaming room to be displayed on a client of the audience account.

In an example arrangement, the pre-recommendation sending unit 1202 is further configured to display, in response to a selection operation performed by the host account on the target object in the list of objects, a pre-recommendation control corresponding to the target object, and send the pre-recommendation message corresponding to the target object to the live streaming server in response to receiving a trigger operation performed by the host account on the pre-recommendation control.

In an example arrangement, the apparatus for live streaming further includes an order quantity display unit configured to receive, in response to a stock quantity of the target object being zero, a quantity of order requests for the target object from the live streaming server, where the quantity of order requests is obtained by the live streaming server determining the order requests triggered by one or more audience accounts in the live streaming room for the target object, and display the quantity of the order requests.

In an example arrangement, the apparatus for live streaming further includes a recommendation sequence adjustment unit configured to send recommendation sequence adjustment information corresponding to the target object to the live streaming server in response to detecting operational information of an adjustment by the host account for a recommendation sequence of the target object. The recommendation sequence adjustment information is used for triggering the live streaming server to send a notification of the adjustment for the recommendation sequence to the audience account, causing the notification of adjustment for the recommendation sequence to be displayed on the client of the audience account.

With respect to the apparatus in the above-described arrangements, the specific way in which the individual modules perform operations has been described in detail in the arrangements relating to the method for recommending the object in the live streaming room, and will not be described in detail here.

FIG. 13 illustrates a block diagram of a device 1300 for live streaming according to an example arrangement. For example, the device 1300 may be a server. Referring to FIG. 13, the device 1300 includes a processing component 1320, which further includes one or more processors, and a memory resource represented by a memory 1322 for storing instructions, such as applications, that may be executed by the processing component 1320. The applications stored in memory 1322 may include one or more modules each corresponding to a set of instructions. In addition, the processing component 1320 is configured to execute the instructions to perform the method for live streaming described above.

The device 1300 may also include a power component 1324 configured to perform power management of device 1300, a wired or wireless network interface 1326 configured to connect device 1300 to a network, and an input-output (I/O) interface 1328. The device 1300 may operate an operating system based on an operating system stored in memory 1322, such as Windows Server, Mac OS X, Unix, Linux, FreeBSD, or the like.

In example arrangements, there is also provided a computer readable storage medium including instructions, such as a memory 1322 including instructions, the instructions being executable by a processor of the device 1300 to accomplish the method for live streaming described above. The memory medium may be a computer readable storage medium, e.g., ROM, random access memory (RAM), CD-ROM, magnetic tape, floppy disk, and optical data storage device.

In example arrangements, there is also provided a computer program product including a computer program, the computer program when executed by the processor implementing the method for live streaming as described in any of the preceding arrangements.

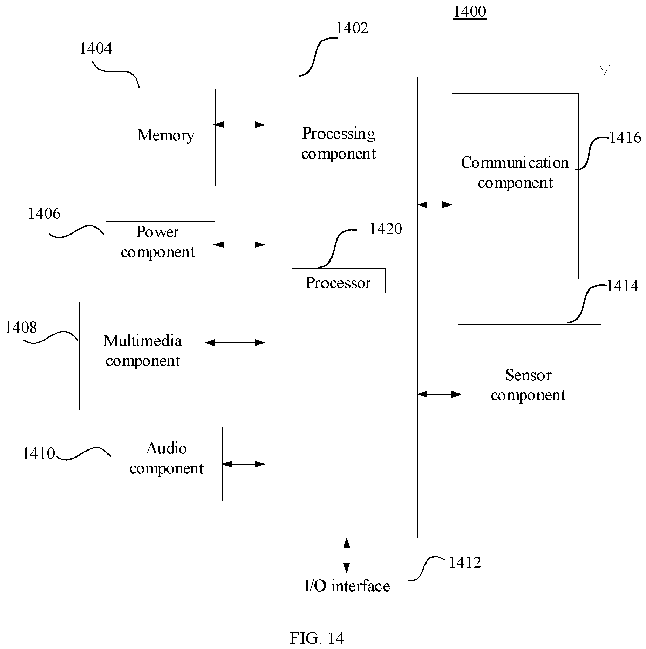

FIG. 14 illustrates a block diagram of a device 1400 for live streaming according to an example arrangement. For example, the device 1400 may be a mobile phone, a computer, a digital broadcast terminal, a message sending and receiving device, a gaming console, a tablet device, a medical device, a fitness device, a personal digital assistant, and the like.

Referring to FIG. 14, the device 1400 may include one or more of the following components processing component 1402, memory 1404, power component 1406, multimedia component 1408, audio component 1410, interface 1412 for input/output (I/O), sensor component 1414, and communication component 1416.

The processing component 1402 generally controls the overall operation of device1400, such as operations associated with display, telephone calls, data communications, camera operations, and recording operations. The processing component 1402 may include one or more processors 1420 to execute instructions to complete all or some of the method for live streaming described above. In addition, the processing component 1402 may include one or more modules that facilitate interaction between the processing component 1402 and other components. For example, the processing component 1402 may include a multimedia module to facilitate interaction between the multimedia component 1408 and the processing component 1402.

The memory 1404 is configured to store various types of data to support operation at the device 1400. Examples of such data include instructions for any application or method operating on device 1400, contact data, phonebook data, messages, pictures, videos, and the like. The memory 1404 may be implemented by any type of volatile or non-volatile storage device or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM.

The power component 1406 provides power to various components of the device 1400. The power component 1406 may include a power management system, one or more power supplies, and other components associated with generating, managing, and distributing power for the device 1400.

The multimedia component 1408 includes a screen that provides an output interface between the device 1400 and a user. In some arrangements, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensors may sense not only the boundaries of the touch or swipe action, but also detect the duration and pressure associated with the touch or swipe action. In some arrangements, the multimedia component 1408 includes a front-facing camera and/or a rear-facing camera. The front-facing camera and/or a rear-facing camera may receive external multimedia data when the device 1400 is in an operating mode, such as a shooting mode or a video mode. Each front-facing and rear-facing camera may be a fixed optical lens system or have a focal length and optical zoom capability.

The audio component 1410 is configured to output and/or input audio signals. For example, the audio component 1410 includes a microphone (MIC) configured to receive external audio signals when the device 1400 is in an operating mode, such as call mode, record mode, and voice recognition mode. The received audio signal may be further stored in memory 1404 or sent via communication component 1416. In some arrangements, the audio component 1410 further includes a speaker for outputting the audio signal.

The I/O interface 1412 provides an interface between the processing component 1402 and the peripheral interface modules, the peripheral interface modules may be keypads, click wheels, buttons, etc. These buttons may include, but are not limited to a home button, a volume button, a start button, and a lock button.

The sensor component 1414 includes one or more sensors for providing a status assessment of various aspects of the device 1400. For example, the sensor component 1414 may detect an open/closed state of device 1400, relative positioning of components, such as the components being a display and keypad of device 1400. The sensor component 1414 may also detect a change in position of device 1400 or a component of device 1400, the presence or absence of user contact with device 1400, orientation or acceleration/deceleration of the device 1400, and a change in temperature of the device 1400. The sensor component 1414 may include a proximity sensor configured to detect the presence of a nearby object in the absence of any physical contact. The sensor component 1414 may also include a light sensor, such as a CMOS or CCD image sensor, for use in an imaging application. In some arrangements, the sensor component 1414 may also include an accelerometer sensor, a gyroscope sensor, a magnetic sensor, a pressure sensor, or a temperature sensor.

The communication component 1416 is configured to facilitate communication between the device 1400 and other devices by wired or wireless means. The device 1400 may access a wireless network based on a communication standard, such as WiFi, a carrier network (e.g., 2G, 3G, 4G, or 5G), or a combination thereof. In an example arrangement, communication component 1416 receives a broadcast signal or broadcast-related information from an external broadcast management system via a broadcast channel. In an example arrangement, the communication component 1416 further includes a near-field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In example arrangements, the device 1400 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the method for live streaming described above.

In example arrangements, there is also provided a computer readable storage medium including instructions, such as a memory 1404 including instructions, the instructions being executable by the processor 1420 of the device 1400 to accomplish the method for live streaming described above. For example, the computer readable storage medium may be a ROM, random access memory (RAM), CD-ROM, magnetic tape, floppy disk, and optical data storage device, among others.

In example arrangements, there is also provided a computer program product including a computer program, the computer program when executed by the processor implementing the method for live streaming as described in any of the preceding arrangements.

Other arrangements of the present disclosure will readily come to the mind of one skilled in the art upon consideration of the specification and practice of the disclosure herein. This disclosure is intended to cover any variations, uses or adaptations of the present disclosure that follow the general principles of the present disclosure and include commonly known or customary technical means in the art that are not disclosed herein. The specification and arrangements are considered example only, and the true scope of the present disclosure is indicated by the following claims.

It is to be understood that the present disclosure is not limited to the precise construction already described above and illustrated in the accompanying drawings, and that various modifications and changes may be made without departing from its scope. The scope of the present disclosure is limited only by the appended claims.

## Claims

1. A method for live streaming, applied to a live streaming server, comprising:
receiving (S201) an appointment request initiated by an audience account for a target object in a list of objects corresponding to a live streaming room,
detecting (S201) whether a recommendation is performed by a host account for the target object;
sending (S202) a notification message to the audience account in response to detecting that the recommendation is performed by the host account for the target object; and
sending (S203) the live streaming room to the audience account, in response to receiving trigger feedback sent by the audience account on the notification message, causing the live streaming room to be displayed on a client of the audience account.

2. The method of claim 1, wherein the method further comprises:
obtaining (S301) a live streaming timer corresponding to the target object in response to detecting that the recommendation is performed by the host account for the target object; and
sending (S302) the live streaming timer to the client of the audience account, causing the live streaming timer to be displayed on the client of the audience account.

3. The method of claim 2, wherein the method further comprises:
setting a link entry control corresponding to the target object,
wherein setting the link entry control to an active state in response to detecting that the live streaming timer expires.

4. The method of claim 1, wherein the method further comprises:
determining (S401) a quantity of order requests initiated by one or more audience accounts in the live streaming room for the target object, in response to detecting that a stock quantity of the target object is zero; and
sending (S402) the quantity of the order requests to a client of the host account, causing the quantity of the order requests to be displayed on the client of the host account.

5. The method of claim 1, wherein the method further comprises:
sending a notification of an adjustment for a recommendation sequence to the audience account in response to detecting that the recommendation sequence is adjusted by the host account, causing the notification of the adjustment for the recommendation sequence to be displayed on the client of the audience account.

6. A method for live streaming, applied to a client of an audience account, comprising:
initiating (S501) an appointment request to a live streaming server in response to an appointment operation performed by the audience account on a target object in a list of objects corresponding to a live streaming room, wherein the appointment request is used for triggering the live streaming server to send, in response to detecting a recommendation is performed by a host account for the target object, a notification message to the audience account;
displaying (S502), in response to receiving the notification message from the live streaming server corresponding to the target object, the notification message; and
displaying (S503) the live streaming room in response to a trigger operation on the notification message.

7. The method of claim 6, wherein said initiating the appointment request to the live streaming server, comprises:
displaying (S701) the list of objects comprising a plurality of candidate objects;
displaying (S702), in response to a selection operation performed by the audience account on a candidate object in the list of objects, an appointment control corresponding to the selected candidate object; and
determining (S703), in response to a trigger operation performed by the audience account on the appointment control, the selected candidate object as the target object, and initiating the appointment request to the live streaming server.

8. The method of claim 7, wherein the method further comprises:
displaying, in response to a stock quantity of the target object being zero, an order control in the list of objects, corresponding to the target object; and
sending, in response to a trigger operation performed by the audience account on the order control, an order request to the live streaming server, causing the live streaming server to determine a quantity of order requests and to send the quantity of order requests to a client of the host account to be displayed on the client of the host account.

9. The method of claim 6, wherein the method further comprises:
receiving, in response to an adjustment for a recommendation sequence of the target object, a notification of the adjustment for the recommendation sequence corresponding to the target object from the live streaming server; and
displaying the notification of the adjustment for the recommendation sequence.

10. An apparatus for live streaming, applied to a live streaming server, comprising:
an appointment request receiving unit (1001), configured to receive an appointment request initiated by an audience account on for a target object in a list of objects corresponding to a live streaming room, and configured to detect whether a recommendation operation is performed by a host account for the target object;
a notification message sending unit (1002), configured to send a notification message to the audience account in response to detecting that the recommendation operation is performed by the host account on for the target object; and
a live streaming room sending unit (1003), configured to send the live streaming room to the audience account, in response to receiving trigger feedback sent by the audience account on the notification message, causing the live streaming room to be displayed on a client of the audience account.

11. The apparatus of claim 10, further comprising a live streaming timer obtaining unit, configured to:
obtain a live streaming timer corresponding to the target object in response to detecting that the recommendation is performed by the host account for the target object; and
send the live streaming timer to the client of the audience account, causing the live streaming timer to be displayed on the client of the audience account.

12. The apparatus of claim 11, further comprising a link entry activation unit, configured to:
set a link entry control corresponding to the target object;
wherein setting the link entry control to an active state in response to detecting that the live streaming timer expires.

13. The apparatus of claim 10, further comprising an order quantity counting unit, configured to:
determine a quantity of order requests initiated by one or more audience accounts in the live streaming room for the target object, in response to detecting that a stock quantity of the target object is zero; and
send the quantity of the order requests to a client of the host account, causing the quantity of the order requests to be displayed on the client of the host account.

14. The apparatus of claim 11, further comprising an adjustment notification sending unit, configured to:
send a notification of an adjustment for a recommendation sequence to the audience account in response to detecting that the recommendation sequence is adjusted by the host account, causing the notification of the adjustment for the recommendation sequence to be displayed on the client of the audience account.

15. A non-transitory computer readable storage medium, wherein instructions in the computer readable storage medium, when executed by a processor of a server, enable the server to perform the method for live streaming of any one of claims 1 to 5.
